# EUROPÄISCHE PATENTSCHRIFT

(11) **EP 2 957 683 B1**
(45) Veröffentlichungstag und Bekanntmachung des Hinweises auf die Patenterteilung: **06.06.2018**
(21) Anmeldenummer: 15171610.7
(22) Anmeldetag: 11.06.2015
(51) Int. Cl.: E03F 5/14, B01D 21/08, B01D 21/00

(54) **ABWASSERBEHANDLUNGSANORDNUNG**
WASTE WATER TREATMENT ASSEMBLY
SYSTÈME DE TRAITEMENT D'EAUX USÉES

(30) Priorität: 12.06.2014 DE 102014211236
(43) Veröffentlichungstag der Anmeldung: 23.12.2015
(73) Patentinhaber: Fränkische Rohrwerke Gebr. Kirchner GmbH + Co KG, 97486 Königsberg/Bayern (DE)
(72) Erfinder: Schütz, Michael, 97475 Zeil am Main (DE)
(74) Vertreter: Herzog, Markus

(56) Entgegenhaltungen:
- EP-A1- 2 353 687
- US-A- 4 270 676
- US-B1- 6 780 310

## Beschreibung

Die Erfindung betrifft eine Abwasserbehandlungsanordnung zum zumindest teilweisen Entfernen von Fremdstoffen, die eine gegenüber Wasser größere spezifische Dichte aufweisen, aus Abwasser, insbesondere aus Regenwasser.

Eine derartige Abwasserbehandlungsanordnung der Anmelderin ist beispielsweise in der DE 10 2004 008 960 A1 beschrieben. Sie umfasst ein zwischen zwei vertikal angeordneten Wartungsschächten verlaufendes Sedimentationsrohr, dessen Innenraum durch eine Gitterwandung in einen Strömungsraum und einen Sedimentationsraum unterteilt ist. Fremdstoffe mit einer höheren spezifischen Dichte als Wasser, also Schmutzfrachten, wie Sand, Feststoffabriebpartikel infolge von Straßenverkehr oder dergleichen sedimentierbare Stoffe, sinken beim Durchströmen des Strömungsraums aufgrund ihrer höheren spezifischen Dichte nach unten und gelangen durch die Gitterwandung in den Sedimentationsraum. Da der Sedimentationsraum im Abwasserbehandlungsbetrieb nicht von Abwasser durchströmt wird, werden die sich in ihm absetzenden Fremdstoffe nicht wieder aufgewirbelt und verbleiben im Sedimentationsraum.

Die bekannte Abwasserbehandlungsanordnung hat sich in der Praxis sehr gut bewährt. Sie hat jedoch den Nachteil, dass zu ihrer Errichtung viel Platz und zudem aufwändige Bodenarbeiten erforderlich sind, die hohe Kosten nach sich ziehen.

Eine weitere Abwasserbehandlungsanordnung ist aus der US 6,780,310 B1 bekannt, welche einen Schacht umfasst, in dem Ringräume angeordnet sind, wobei eine Einlassleitung zu filtrierendes Wasser oberhalb der Ringräume in den Schacht einspeist.

Ferner seien an dieser Stelle die EP 2 353 687 A1 und US 4 270 676 A erwähnt.

Es ist daher Aufgabe der vorliegenden Erfindung, eine Abwasserbehandlungsanordnung der eingangs genannten Art anzugeben, welche raumsparender und kostengünstiger bereitgestellt werden kann.

Diese Aufgabe wird erfindungsgemäß gelöst durch eine Abwasserbehandlungsanordnung nach Anspruch 1.

Der Erfindung liegt die Idee zugrunde, den im Wesentlichen linear verlaufenden Strömungsweg des aus der DE 10 2004 008 960 A1 bekannten Sedimentationsrohrs quasi aufzuwickeln. Dabei bildet der in Umfangsrichtung des Schachts verlaufende Kanalabschnitt des oberen Ringraums den Strömungsraum, während der untere Ringraum den Sedimentationsraum bildet, in dem sich die Fremdstoffe absetzen können. Der den unteren Ringraum in Höhenrichtung durchsetzende Kanal stellt sicher, dass das Abwasser in den oberen Ringraum hinein bzw. aus diesem heraus gelangen kann, ohne die Fremdstoffe, die sich in dem unteren Ringraum abgesetzt haben, wieder aufzuwirbeln.

Bereits der in Umfangsrichtung des Schachts verlaufende Kanalabschnitt des oberen Ringraums eines einzigen Ringraumpaar hat bei einem Außendurchmesser des Ringraums von etwa 600 mm und einem Innendurchmesser des Ringraums von etwa 200 mm eine Länge von etwa 1250 mm (mittlerer Radius des in Umfangsrichtung des Schachts verlaufenden Kanalabschnitts: 400 mm). Durch Übereinanderanordnung einer Mehrzahl von Ringraumpaaren in Höhenrichtung des Schachts kann der Strömungsraum verlängert werden. Bereits durch Übereinanderanordnung von vier Ringraumpaaren kann eine Länge der Sedimentationstrecke von 5 m bereitgestellt werden. Unter Berücksichtigung des Strömungsquerschnitts des oberen Ringraums eignet sich die erfindungsgemäße Abwasserbehandlungsanordnung überwiegend für kleinere Anschlussfläche (das auf der Anschlussfläche niedergehende Regenwasser wird von der daran angeschlossenen Abwasserbehandlungsanordnung behandelt) in der Größenordnung von zwischen 400 m² und 600 m². Die erfindungsgemäße Abwasserbehandlungsanordnung kann daher insbesondere für Hinterhöfe, beispielsweise Schulhöfe, und dergleichen Flächen verwendet werden.

Ferner ist es vorteilhaft, wenn die erste Öffnung den Zulauf zu dem wenigstens einen Ringraumpaar und die dritte Öffnung den Ablauf aus dem Ringraumpaar bildet. In diesem Fall wird das Ringraumpaar von unten nach oben durchströmt, was aufgrund der Tatsache, dass die Strömung der Schwerkraft entgegen gerichtet ist, zu einer gleichmäßigeren, insbesondere weniger turbulenten, Strömung führt.

Um den Übertritt von Abwasser von einem Ringraumpaar zum jeweils benachbarten Ringraumpaar sicherstellen zu können, ist es vorteilhaft, wenn die dritte Öffnung des jeweils unteren Ringraumpaars und die erste Öffnung des jeweils oberen Ringraumpaars einander in Höhenrichtung des Schachts miteinander in Strömungsverbindung stehen. In konstruktiv einfacher Weise können sie beispielsweise zumindest teilweise, vorzugsweise vollständig, überlappend angeordnet sein.

Um unabhängig von der Anzahl der in dem Schacht vorgesehenen Ringraumpaare sicherstellen zu können, dass die dritte Öffnung des Ringraumpaars bzw. des obersten Ringraumpaars stets an der gleichen Umfangsposition des Schachts angeordnet ist, was im Hinblick auf die Positionen des Zulaufs zu und des Ablaufs aus dem Schacht von konstruktiver Bedeutung sein kann, wird vorgeschlagen, dass an der Oberseite und der Unterseite des wenigstens einen Ringraumpaars Ausrichtungsvorrichtungen vorgesehen sind, welche zum Zusammenwirken mit zugehörigen Ausrichtungsvorrichtungen eines benachbarten Ringraumpaars ausgebildet und bestimmt sind. Ferner ist es vorteilhaft, wenn die erste Öffnung, die zweite Öffnung und die dritte Öffnung in Höhenrichtung des Schachts zueinander fluchtend angeordnet sind. In diesem Fall ist es vorteilhaft, wenn die im oberen Ringraum vorgesehene Trennwand schräg verläuft.

Ferner kann vorgesehen sein, dass das wenigstens eine Ringraumpaar einen von den Kanalabschnitten strömungsmäßig getrennten, in Höhenrichtung des Schachts verlaufenden, vozugsweise zentralen, Durchgang aufweist. Durch diesen Durchgang kann in einem Anlagenreinigungsbetrieb, in dem die sedimentierten Fremdstoffe aus der Abwasserbehandlungsanordnung entfernt werden, beispielsweise der Saugrüssel eines Nasssaugers oder einer Schmutzwasserpumpe zum Schachtboden geführt werden, um dort die wieder aufgewirbelten und ausgespülten Fremdstoffe abzusaugen. Die Reinigung braucht also nicht notwendigerweise durch ein Spülfahrzeug vorgenommen zu werden. Vielmehr genügt, ein Nasssauger oder eine Schmutzwasserpumpe.

Um die abgelagerten Fremdstoffe im Anlagenreinigungsbetrieb wieder aufwirbeln und zum Schachboden führen zu können, werden zwei alternative Weiterbildungen der erfindungsgemäßen Abwasserbehandlungsanordnung vorgeschlagen.

Gemäß einer ersten alternativen Weiterbildung wird vorgeschlagen, dass die Wandungen, welche den den unteren Ringraum in Höhenrichtung durchsetzenden Kanalabschnitt bilden, und die Trennwand an einem gesonderten Einsatz ausgebildet sind. Diese Ausbildung ermöglicht in besonders einfacher Weise die Umrüstung der Abwasserbehandlungsanordnung vom Abwasserbehandlungsbetrieb auf den Anlagenreinigungsbetrieb, in dem die sedimentierten Fremdstoffe aus der Abwasserbehandlungsanordnung entfernt werden. Man braucht nämlich lediglich den Einsatz herauszuziehen, ihn um eine horizontale Achse um 180° zu drehen und so invertiert wieder in das Ringraumpaar einzusetzen. Durch diese invertierte Anordnung des Einsatzes durchsetzt der in Höhenrichtung des Schachts verlaufende Kanalabschnitt nun den oberen Ringraum, in dem sich ja kein Sediment abgesetzt hat, während der untere Ringraum mittels der Trennwand unterteilt und in Umfangsrichtung des Schachts durchströmt wird, wodurch die sedimentierten Fremdstoffe wieder aufgewirbelt werden. Durch ein erneutes Invertieren des Einsatzes nach Abschluss der Reinigung der Abwasserbehandlungsanordnung kann diese wieder auf den nächsten Abwasserbehandlungsbetrieb vorbereitet werden.

Der invertierbare Einsatz hat zwar den Vorteil, dass ein für die Reinigung der Abwasserbehandlungsanordnung erforderliches Gerät, nämlich der strömungsleitende Einsatz, bereits in der Abwasserbehandlungsanordnung selbst vorhanden ist und nicht zu dieser transportiert zu werden braucht. Grundsätzlich ist es jedoch auch denkbar, den Einsatz zur Reinigung durch einen speziellen Reinigungseinsatz auszutauschen. Dieser spezielle Reinigungseinsatz könnte beispielsweise für jeden oberen und unteren Ringraum eine zur Höhenrichtung des Schachts geneigt verlaufende Trennwand aufweisen, so dass während der Reinigung alle Ringräume von Spülwasser durchströmt werden.

Gemäß der zweiten alternativen Weiterbildung wird vorgeschlagen, dass der Innenraum des in Höhenrichtung des Schachts verlaufenden Durchgangs mit dem unteren Ringraum und gewünschtenfalls auch dem oberen Ringraum durch wenigstens eine in der Umfangswandung des Durchgangs vorgesehene Öffnung wahlweise in oder außer Fluidverbindung bringbar ist. Beispielsweise kann in den in Höhenrichtung des Schachts verlaufenden Durchgang ein Rohr einsetzbar sein, welches die wenigstens eine Öffnung im Abwasserbehandlungsbetrieb verschließt. Zur Vermeidung von Leckagefluidströmen ist es dabei vorteilhaft, wenn die Außenkontur des Rohrs im Wesentlichen der Innenkontur des Durchgangs entspricht.

Zur Ermöglichung des Anlagenreinigungsbetrieb kann dieses Rohr gemäß einer ersten Ausführungsvariante aus dem Durchgang entfernbar sein, um die wenigstens eine Öffnung für Reinigungszwecke freizugeben. In diesem Fall kann das Rohr vollwandig ausgebildet sein.

Gemäß einer zweiten Ausführungsvariante ist es jedoch auch denkbar, dass auch das Rohr wenigstens eine Öffnung aufweist, welche durch Verdrehen des Rohrs mit der wenigstens einen Öffnung des Durchgangs in oder außer Überlappung bringbar ist, um die wenigstens eine Öffnung freizugeben bzw. wieder zu verschließen. Gemäß beiden Ausführungsvarianten können die Fremdstoffe, die sich im unteren Ringraum gesammelt haben, unter Verwendung eines Spülgeräts zum Schachtboden befördert und von dort mittels eines Nasssaugers oder einer Schmutzwasserpumpe abgesaugt werden. Hierzu ist es vorteilhaft, wenn am unteren Ende des Rohrs wenigstens eine Fluideintrittsöffnung vorgesehen ist.

Ist der Abstand der Zwischenwand von der oberen Begrenzungswand größer als ihr Abstand von der unteren Begrenzungswand, d.h. ist die Zwischenwand also nicht auf halber Höhe zwischen der oberen und der unteren Begrenzungswand angeordnet, sondern näher an der unteren Begrenzungswand, so kann die Abwasserbehandlungsvorrichtung mit größeren Fluiddurchsatz pro Zeiteinheit betrieben werden. Zudem kann bei der ersten alternativen Weiterbildung der Effekt, dass im Anlagenreinigungsbetrieb auch der oberen Ringraum zumindest teilweise durchspült wird, auch mit dem invertierten Einsatz erzielt werden, d.h. ohne dass ein spezieller Reinigungseinsatz vorgesehen zu werden braucht.

Umfasst die Abwasserbehandlungsanordnung eine Mehrzahl von Ringraumpaaren, so ist es vorteilhaft, wenn die diesen zugeordneten Einsätze miteinander einstückig ausgebildet sind. Hierdurch kann das Umrüsten von Abwasserbehandlungsbetrieb auf Anlagenreinigungsbetrieb und umgekehrt vereinfacht werden.

Im Abwasserbehandlungsbetrieb kann auf den, vorzugsweise zentralen, Durchgang ein Aufsatzrohr aufgesetzt sein, dessen oberes Ende oberhalb der Oberkante des Ablaufs aus dem Schacht angeordnet ist und das so für den Fall eines Starkregenereignisses als Notüberlauf dienen kann. Bei der zweiten alternativen Weiterbildung kann aber auch die Länge des in den Durchgang eingesetzten Rohrs derart bemessen sein, dass das Rohr aus dem oberen Ende des Durchgang herausragt, um für den Fall eines Starkregenereignisses als Notüberlauf dienen zu können. In diesem Fall muss lediglich am unteren Ende des Rohrs wenigstens eine Fluideintrittsöffnung vorgesehen sein. Bei normalen Regenereignissen, d.h. Regenereignissen, für deren Bewältigung die Abwasserbehandlungsanordnung ausgelegt ist, sorgt der Höhenunterschied zwischen dem oberen Ende des Aufsatzrohrs bzw. des in den Durchgang eingesetzten Rohrs und der Oberkante des Ablaufs aus dem Schacht dafür, dass das Abwasser nicht durch den Durchgang und das Aufsatzrohr bzw. duch das in den Durchgang eingesetzte Rohr zum Ablauf gelangt, sondern ordnungsgemäß das Ringraumpaar bzw. die Ringraumpaare durchströmt. für den Fall, dass der Höhenunterschied bzw. der diesem Höhenunterschied entsprechende hydrostatische Druck nicht ausreichen sollte, um dem dynamischen Strömungsdrucks des zulaufenden Abwassers entgegenwirken zu können, kann das Aufsatzrohr bzw. das in den Durchgang eingesetzte Rohr mit einem Deckel, beispielsweise einem gegen Federkraft öffenbaren Deckel, oder einem Ventil ausgestattet sein.

Soll die Notüberlauffunktion verhindert werden, um entsprechenden Vorschriften einiger Bundesländer zu genügen, so kann der Deckel des Aufsatzrohrs bzw. des in den Durchgang eingesetzten Rohrs auch fest verschlossen ausgebildet sein. Alternativ kann auch der zentrale Durchgang der obersten Sedimentationsbaugruppe mit einem fest verschlossenen Deckel versehen sein.

Die zentrale Anordnung des Durchgangs ist vorteilhaft, weil hierdurch der Strömungsquerschnitt insbesondere des oberen Ringraums nicht beeinträchtigt wird, sondern lediglich der Raum ausgenutzt werden kann, der ohnehin erforderlich ist, um im Hinblick auf die Sicherstellung eines ausreichend langen Strömungswegs einen ausreichend großen Innendurchmesser des Ringraums bereitstellen zu können. Beispielsweise kann der Durchmesser des zentralen Durchgangs etwa ein Drittel des Innendurchmessers des Schachts aufweisen. So kann der Durchmesser des zentralen Durchgangs beispielsweise 200 mm betragen, wenn der Innendurchmesser des Schachts etwa 600 mm beträgt.

In Weiterbildung der Erfindung wird vorgeschlagen, dass wenigstens ein Ringraumpaar als von dem Schacht und gegebenenfalls von einem benachbarten Ringraumpaar gesonderte Baugruppe ausgebildet ist.

Dies ermöglicht beispielsweise die flexible Ausstattung des Schachts mit der für den jeweiligen Anwendungsfall erforderlichen Reinigungsleistung, d.h. der für den jeweiligen Anwendungsfall erforderlichen Anzahl von Ringraumpaar-Baugruppen. Darüber hinaus erleichtert diese Weiterbildung die Wartung der erfindungsgemäßen Abwasserbehandlungsanordnung, da beschädigte Ringraumpaar-Baugruppen ohne Weiteres ausgebaut und ersetzt werden können. Schließlich ermöglicht diese Weiterbildung auch die Nachrüstung bereits bestehender Wartungsschächte zu Reinigungsschächten.

Wenigstens eine Ringraumpaar-Baugruppe kann aus Kunststoff gefertigt sein. Beispielsweise kann sie aus Platten- und Rohrzuschnitten zusammengesetzt sein, wobei die für Fremdstoffe durchlässige Zwischenwand eine Mehrzahl von Durchtrittsöffnungen aufweist, welche den Durchtritt von Fremdstoffen ermöglichen. Vorzugsweise ist die Zwischenwand zumindest teilweise, vorzugsweise vollständig, mit einer Gitterstruktur ausgebildet. Der den, vorzugsweise zentralen, Durchgang bildende Rohrzuschnitt braucht nicht notwendigerweise einen kreiszylindrischen Querschnitt aufzuweisen. Vielmehr ist es auch denkbar, und im Hinblick auf die Fertigung des Einsatzes vorteilhaft, wenn der Querschnitt des den, vorzugsweise zentralen, Durchgang bildenden Rohrzuschnitts an der dem Einsatz zugewandten Seite abgeflacht ausgebildet ist. In diesem Fall kann der Einsatz nämlich mit einem im Wesentlichen rechteckigen oder quadratischen Querschnitt ausgebildet werden.

Alternativ zu der Herstellung der Ringraumpaar-Baugruppe aus Platten- und Rohrzuschnitten kann diese zumindest teilweise auch als Rotationsgussteil gefertigt sein. Beispielsweise können die untere Begrenzungswand, eine äußere Umfangswand und das den, vorzugsweise zentralen, Durchgang bildende Rohr einstückig als Rotationsgussteil ausgebildet sein. Nach dem Einsetzen der für Fremdstoffe durchlässigen Zwischenwand braucht das Rotationsgussteil dann zur Fertigstellung der Ringraumpaar-Baugruppe nur noch mittels der oberen Begrenzungswand verschlossen zu werden.

Ferner kann der Einsatz aus Metallblech gefertigt sein, beispielsweise VA-Stahl, und zwar insbesondere als Stanz- und Biegeteil.

In Weiterbildung kann oberhalb des Ringraumpaars bzw. oberhalb des obersten Ringraumpaars ein von dem aus diesem Ringraumpaar austretenden Abwasser durchströmbares Gehäuse angeordnet sein, in dem ein Filtermedium zum Ad- oder/und Absorbieren von Fremdstoffen aus dem Abwasser aufgenommen ist. Dabei ist das Filtermedium hauptsächlich dazu gedacht, gelöste Stoffe zurückzuhalten, welche physikalisch aufgrund von Dichteunterschieden nicht sedimentierbar sind, wie z.B. gelöste Schwermetalle oder feinste, freie Ölpartikel. Darüber hinaus werden durch das Filtermedium auch in geringem Maße Feststoffe zurückgehalten, die aus verschiedenen Gründen in den Ringraumpaaren nicht abgeschieden wurden, z.B. weil bei einem starken Regenereignis die Aufenthaltszeit nicht groß genug war und dadurch Anteile der zugeflossenen Partikelfracht wieder aus den Ringraumpaaren ausgetragen wurden. Hierdurch kann es im Laufe der Zeit zum Zusetzen des Filtermediums kommen.

Zusätzlich oder alternativ kann dem oberen Ende des Schachts benachbart eine Auffangvorrichtung für Leichtstoffe vorgesehen sein, d.h. für Stoffe mit einer geringeren spezifischen Dichte als Wasser, beispielsweise Leichtflüssigkeiten, wie Öl, Benzin oder dergleichen. Unter dem Begriff "Leichtstoffe" sollen in der vorliegenden Anmeldung aber nicht nur Flüssigkeiten, sondern sämtliche im Abwasser mitgeführten Stoffe verstanden werden, die eine gegenüber Wasser geringere Dichte aufweisen. Die Auffangvorrichtung kann beispielsweise eine Tauchwand oder ein Tauchrohr umfassen, deren unteres Ende unterhalb der Unterkante des Ablaufs aus dem Schacht angeordnet ist.

Gemäß einem weiteren Gesichtspunkt betrifft die Erfindung eine Ringraumpaar-Baugruppe für eine Abwasserbehandlungseinrichtung der vorstehend beschriebenen Art.

Die Erfindung wird im Folgenden anhand der beigefügten Zeichnung an zwei Ausführungsbeispielen näher erläutert werden. Es stellt dar:
- Figur 1: eine Schnittansicht einer Abwasserbehandlungsanordnung gemäß einer ersten Ausführungsform im Abwasserbehandlungsbetrieb;
- Figur 2: eine Draufsicht auf eine Ringraumpaar-Baugruppe, wie sie bei der Ausführungsform der Figur 1 zum Einsatz kommt;
- Figur 3: eine Draufsicht auf einen die Strömung des zu reinigenden Abwassers leitenden Einsatz für die Ringraumpaar-Baugruppe der Figur 2;
- Figur 4: eine Schnittansicht längs der Linie IV-IV in Figur 2;
- Figur 5: eine schematische Perspektivansicht zur Erläuterung der Funktion des die Strömung des zu reinigenden Abwassers leitenden Einsatzes;
- Figur 6: eine Ansicht ähnlich Figur 4 zur Erläuterung des Anlagenreinigungsbetriebs;
- Figur 7: eine Schnittansicht einer zweiten Ausführungsform einer Abwasserbehandlungsanordnung im Abwasserbehandlungsbetrieb; und
- Figur 8: eine perspektivische Ansicht einer dritten Ausführungsform einer Abwasserbehandlungsanordnung.

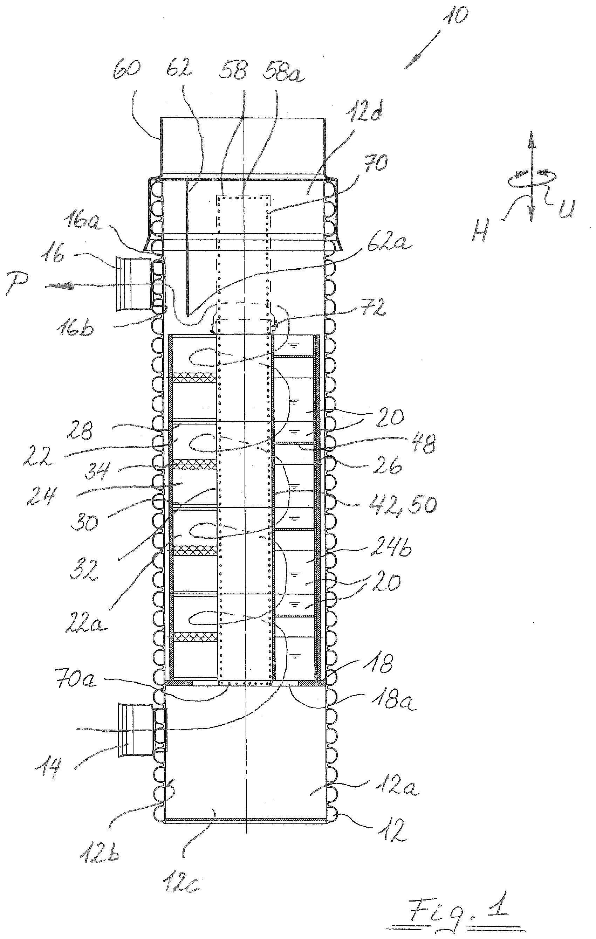

In Figur 1 ist eine erfindungsgemäße Abwasserbehandlungsanordnung ganz allgemein mit 10 bezeichnet. Sie umfasst einen Schacht 12, der in dem dargestellten Ausführungsbeispiel als doppelwandiges Kunststoffrohr mit einem glatten Innenrohr und gewelltem Außenrohr ausgebildet ist. Grundsätzlich kann die Erfindung aber auch bei Schächten eingesetzt werden, die aus Beton oder anderen zur Schachtherstellung bekannten Materialien gefertigt sind. Dem Innenraum 12a des Schachts 12 wird über einen mit dem Schacht 12 verbundenen Zulaufstutzen 14 zu reinigendes Abwasser zugeführt. Ferner wird das in der Abwasserbehandlungsanordnung 10 behandelte bzw. gereinigte Abwasser über einen mit dem Schacht 12 verbundenen Ablaufstutzen 16 wieder aus dem Schacht 12 ausgeleitet.

In dem Schacht 12 ist oberhalb des Zulaufstutzens 14 eine Zwischenplatte 18 angeordnet, die mit der Innenwand 12b des Schachts 12 flüssigkeitsdicht verbunden ist, beispielsweise mit dieser verschweißt ist. Auf der Zwischenplatte 18 stehen in Höhenrichtung H des Schachts 12 übereinander gestapelte Sedimentationsbaugruppen 20 auf, von denen jede zwei ebenfalls in Höhenrichtung H des Schachts 12 übereinander angeordnete Ringräume 22 und 24 aufweist. Diese Sedimentationsbaugruppen 20 bilden daher Ringraumpaar-Baugruppen im Sinne der vorliegenden Erfindung. Zu behandelndes Abwasser wird den Sedimentationsbaugruppen 20 durch eine zentrale Öffnung 18a der Zwischenplatte 18 zugeführt.

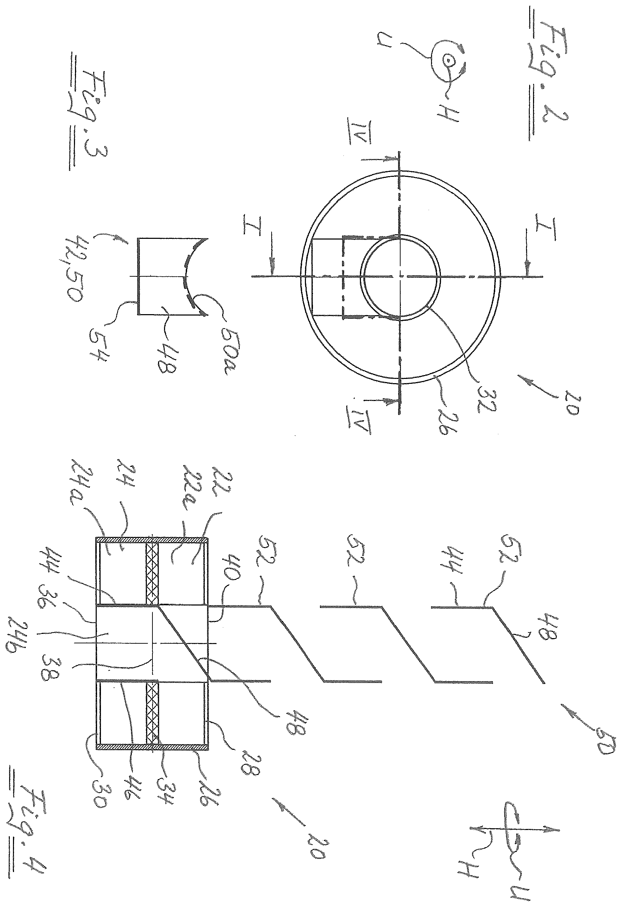

Der Aufbau der Sedimentationsbaugruppen 20 wird nachstehend mit Bezug auf die Figuren 2 bis 4 näher erläutert werden.

Jede Sedimentationsbaugruppe 20 hat eine im Wesentlichen zylindrische, vorzugsweise im Wesentlichen kreiszylindrische, Gestalt mit einer Umfangswand 26, einer oberen Begrenzungswand 28 und einer unteren Begrenzungswand 30, die aus im Wesentlichen flüssigkeitsundurchlässigem Material, beispielsweise Kunststoff, hergestellt sind. Ferner sind die obere Begrenzungswand 28 und die untere Begrenzungswand 30 durch ein zentrales Rohr 32 miteinander verbunden, das ebenfalls aus einem im Wesentlichen flüssigkeitsundurchlässigem Material, beispielsweise Kunststoff, hergestellt sein kann. Etwa auf halber Höhe der Umfangswand 26 ist der Innenraum der Sedimentationsbaugruppe 20 durch eine für Flüssigkeit und Feststoffe durchlässige Wandung 34, die beispielsweise von einer Gitterstruktur gebildet sein kann, in den oberen Ringraum 22 und den unteren Ringraum 24 unterteilt. An einer vorgegebenen Umfangsposition der zwischen der Umfangswand 26 und dem zentralen Rohr 32 gebildeten Ringräume 22, 24 weisen die diese Ringräume 22, 24 in Höhenrichtung H begrenzenden Wandungen 28, 30 und 34 Öffnungen auf, nämlich die untere Begrenzungswand 30 eine erste Öffnung 36, die für Flüssigkeit und Feststoffe durchlässige Wandung 34 eine zweite Öffnung 38 und die obere Begrenzungswand 28 eine dritte Öffnung 40 (siehe Figur 4). Dabei sind die drei Öffnungen 36, 38, 40 an den gleichen Umfangspositionen, d.h. in Höhenrichtung H zueinander fluchtend bzw. einander überlappend, angeordnet.

Im Abwasserbehandlungsbetrieb der Abwasserbehandlungsvorrichtung 10 ist durch die Öffnungen 36, 38, 40 ein von den Sedimentationsbaugruppen 20 gesondert ausgebildeter Einsatz 42 eingesetzt. Die Funktion dieses Einsatzes 42 besteht darin, das Abwasser in einer vorbestimmten Art und Weise durch die Sedimentationsbaugruppen 20 zu leiten.

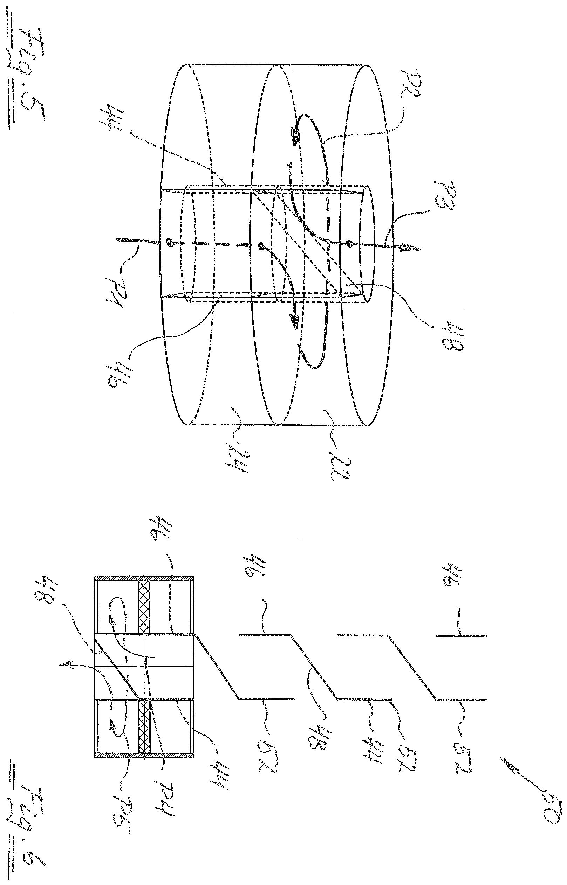

Der Einsatz 42 umfasst zwei im Wesentlichen in Höhenrichtung H verlaufende Trennwände 44 und 46, die im Abwasserbehandlungsbetrieb den unteren Ringraum 24 in einen Totraum 24a und einen Durchleitungskanalabschnitt 24b unterteilen. Der Totraum 24a wird im Abwasserbehandlungsbetrieb vom zu behandelnden Abwasser im Wesentlichen nicht durchströmt, so dass sich Fremdstoffe, die durch die Gitterwandung 34 in ihn eingetreten sind, in ihm absetzen können. Der Einsatz umfasst ferner eine relativ zur Höhenrichtung H geneigt verlaufende Trennwand 48, die dem oberen Ringraum 22 zugeordnet ist und sich von dem in Figur 4 linken Ende der zweiten Öffnung 38 zu dem in Figur 4 rechten Ende der dritten Öffnung 40 erstreckt. Auf diese Weise unterteilt die Trennwand 48 den oberen Ringraum 22 derart, dass durch die zweite Öffnung 38 in den oberen Ringraum 22 eintretende Flüssigkeit durch die Trennwand 48 in den Figuren 4 und 5 nach rechts abgelenkt (siehe Pfeil P1 in Figur 5) und, nachdem sie einen vom Ringraum 22 gebildeten Umfangskanalabschnitt 22a in Umfangsrichtung U durchlaufen hat (siehe Pfeil P2 in Figur 5), wiederum durch die Trennwand 48 nach oben in den Durchleitungskanalabschnitt 24b der nächsten Sedimentationsbaugruppe 20 umgelenkt wird (siehe Pfeil P3 in Figur 5).

Sedimentationsbaugruppe 20 für Sedimentationsbaugruppe 20 wird das zu behandelnde Abwasser zunächst mittels des Durchleitungskanalabschnitts 24b durch den unteren Ringraum 24 hindurchgeleitet, ohne die Fremdstoffe, die sich in dessen Totraum 24a abgesetzt haben, wieder aufzuwirbeln. Anschließend tritt das zu behandelnde Abwasser in den oberen Ringraum 22 ein und durchströmt diesen im Wesentlichen laminar, auf jeden Fall jedoch turbulenzberuhigt, so dass sich die vom Abwasser mitgeführten Fremdstoffe gravitationsbedingt nach unten bewegen und durch die Gitterstruktur der Zwischenwand 34 in den Totraum 24a des unteren Ringraums 24 eintreten können. Schließlich wird das Abwasser dann an die nächste Sedimentationsbaugruppe 20 weitergeleitet, durch die es in der gleichen Art und Weise hindurchgeleitet wird. Der gesamte Strömungsweg des zu reinigenden Abwassers vom Zulaufstutzen 14 bis zum Ablaufstutzen 16 ist in Figur 1 durch den Pfeil P angedeutet.

Wie in der Zusammenschau der Figuren 3 und 4 dargestellt ist, ist es in dem dargestellten Ausführungsbeispiel bevorzugt, dass die den einzelnen Sedimentationsbaugruppen 20 zugeordneten Einsätze 42 als ein gemeinsam handhabbarer, einstückiger Gesamteinsatz 50 ausgebildet sind. In Figur 4 erkennt man, dass die einer unteren zweier benachbarter Sedimentationsbaugruppen 20 zugeordneten Trennwände 44 und 48 mit der einer oberen der benachbarten Sedimentationsbaugruppen 20 zugeordneten Trennwand 46 jeweils von einem einzigen, gewinkelt geformten Element 52 gebildet sind. Diese Elemente 52 sind, ebenso wie die unterste Trennwand 46 und die oberste Trennwandkombination 44/48 an einem sich in Höhenrichtung H erstreckenden Basiselement 54 (siehe Figur 3) befestigt bzw. mit diesem stoffschlüssig verbunden. Vorzugsweise ist der Gesamteinsatz 50 aus Metall gefertigt, beispielsweise Stahlblech, insbesondere VA-Stahlblech.

Grundsätzlich ist es zwar denkbar, auch an der gekrümmten Innenseite 50a des Gesamteinsatzes ein sich in Höhenrichtung H erstreckendes Stabilisierungselement 56 vorzusehen, das in Figur 3 gestrichelt angedeutet ist. Sofern sich die Trennwände 44, 46, 48 mit ausreichender Präzision gegen das zentrale Rohr 32 anlegen, so dass allenfalls geringe Mengen von Abwasser durch etwaig enstehende Spalte hindurchtreten können, kann auf dieses Stabilisierungselement 56 aber auch verzichtet werden.

Ein besonderer Vorteil, den der wie vorstehend beschrieben aufgebaute und von den Sedimentationsbaugruppen 20 gesondert ausgebildete Gesamteinsatz 50 bietet, ist eine einfache Umrüstbarkeit der Abwasserbehandlungsanordnung 10 von dem vorstehend beschriebenen Abwasserbehandlungsbetrieb auf einen Anlagenreinigungsbetrieb, der das Entfernen der Fremdstoffe ermöglicht, die sich in den Toträumen 24a der unteren Ringräume 24 abgesetzt haben. Für diese Umrüstung braucht man nämlich den Gesamteinsatz 50 lediglich aus dem von den Öffnungen 36, 38, 40 gebildeten Schacht herauszuziehen, um eine im Wesentlichen horizontal verlaufende Achse um 180° zu drehen und so invertiert, d.h. über Kopf, wieder in den Schacht einzuführen. Der so erhaltene Zustand ist in Figur 6 dargestellt. Das von oben zugeführte Spülwasser wird nunmehr von den Trennwänden 44, 46 durch den oberen Ringraum 24 hindurchgeleitet (siehe Pfeil P4 in Figur 6) und von der Trennwand 48 so umgelenkt, dass es den unteren Ringraum 24 in Umfangsrichtung U durchströmt (siehe Pfeil P5 in Figur 6), dabei die Fremdstoffe, die sich im unteren Ringraum abgesetzt haben, wieder aufwirbelt und mit sich fort trägt. Die so ausgetragenen Fremdstoffe sammeln sich im Bodenraum 12c des Schachts an, von wo sie mittels einer Saugleitung, die durch das zentrale Rohr 32 eingeführt werden kann, ausgetragen werden können.

Nach Abschluss der Reinigung der Abwasserbehandlungsanlage 10 braucht der Gesamteinsatz 50 lediglich erneut um 180° gedreht zu werden, um die Abwasserbehandlungsanlage 10 auf einen erneuten Abwasserbehandlungsbetrieb vorzubereiten.

Zur Ausführungsform gemäß Figur 1 ist noch nachzutragen, dass auf das obere Ende des zentralen Rohrs 32 der obersten Sedimentationsbaugruppe 20 ein Überlaufrohr 58 aufgesetzt ist, dessen oberes Ende 58a oberhalb der Oberkante 16a des Ablaufstutzens angeordnet ist. Infolge dieses Höhenunterschieds kann Abwasser, das vom Bodenraum 12c des Schachts 12 in das zentrale Rohr 32 eintritt, nur dann aus dem oberen Ende 58a des Überlaufrohrs 58 austreten, wenn der dynamische Druck des durch den Zulaufstutzen 14 zulaufenden Abwassers so hoch ist, dass er den der Höhendifferenz entsprechenden hydrostatischen Druck übersteigt. Dies kann beispielsweise bei Starkregenereignissen vorkommen. In diesem Fall dient das Rohr 58 dann als Notüberlauf, der zusammen mit den zentralen Rohren 32 der Sedimentationsbaugruppen 20 als ein die Sedimentationsbaugruppen 20 umgehender Bypass dient.

Anstelle des auf das obere Ende des zentralen Rohrs 32 aufgesetzten Überlaufrohrs 58 kann alternativ ein (in Figur 1 gepunktet angedeutetes) Rohr 70 in das zentrale Rohr 32 eingesetzt werden, wobei es vorteilhaft ist, wenn sich das Rohr 70 möglichst eng an das Rohr 32 anschmiegt.

Das Rohr 70 kann ferner dazu genutzt werden, die Sedimentationsbaugruppen 20 vor Auftrieb zu sichern. Hierzu kann das Rohr 70 mit seinem unteren Ende 70a an der Zwischenplatte 18 befestigt sein, und zwar vorzugsweise formschlüssig, beispielsweise mittels eines Bajonettverschlusses, und zudem oberhalb der obersten Sedimentationsbaugruppe 20, vorzugsweise deren oberer Begrenzungswand 28 benachbart, wenigstens einen Vorsprung 72 aufweisen, der mit der obersten Sedimentationsbaugruppe 20 in formschlüssigen Niederhalteeingriff tritt. Der wenigstens eine Vorsprung 72 kann beispielsweise wulstförmig ausgebildet sein.

Nachzutragen ist noch, dass von einem Deckel 60 des Schachts 12 eine Tauchwand 62 nach unten absteht, deren unteres Ende 62a unterhalb der Unterkante 16b des Ablaufstutzens 16 angeordnet ist. Hierdurch können sich im Bereich des oberen Endes 12d des Schachts 12 Stoffe ansammeln, deren spezifisches Gewicht geringer ist als jenes von Wasser, beispielsweise Leichtflüssigkeiten, etwa Öl, Benzin und dergleichen.

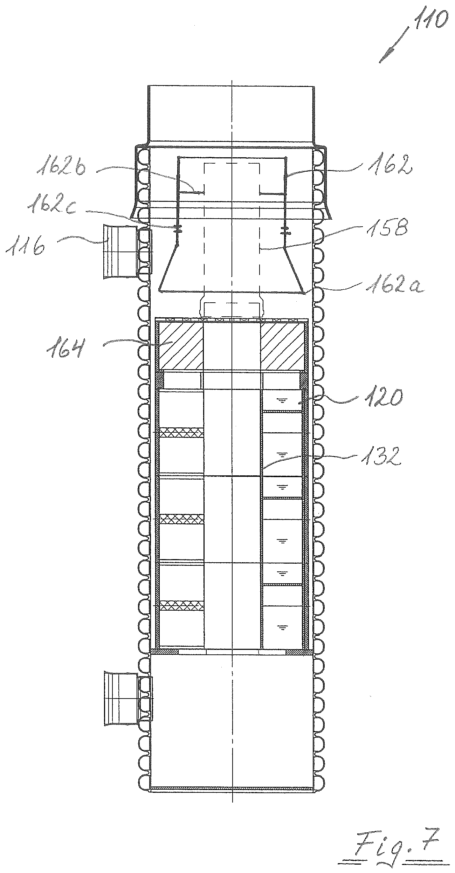

In Figur 7 ist eine zweite Ausführungsform einer erfindungsgemäßen Abwasserbehandlungsanordnung dargestellt. Diese entspricht im Wesentlichen der Ausführungsform gemäß Figur 1. Daher sind analoge Teile mit den gleichen Bezugszeichen versehen wie in den Figuren 1 bis 6, jedoch vermehrt um die Zahl 100. Darüber hinaus wird die Abwasserbehandlungsanordnung 110 im Folgenden nur insoweit beschrieben werden, als sie sich von der Abwasserbehandlungsanordnung 10 der Figuren 1 bis 6 unterscheidet, auf deren Beschreibung hiermit ansonsten ausdrücklich verweisen sei.

Die Abwasserbehandlungsanordnung 110 unterscheidet sich von der Abwasserbehandlungsanordnung 10 dadurch, dass die oberste Sedimentationsbaugruppe durch eine Baugruppe 164 ersetzt ist, welche ein Filtermedium zum Ad- oder/und Absorbieren von Fremdstoffen aus dem Abwasser umfasst.

Die Ausführungsform der Figur 7 unterscheidet sich von jener der Figuren 1 bis 6 ferner dadurch, dass anstelle der Tauchwand 62 ein Tauchrohr 162 als Abscheidevorrichtung für Stoffe vorgesehen ist, deren spezifisches Gewicht geringer ist als jenes von Wasser, beispielsweise Leichtflüssigkeiten, etwa Öl, Benzin und dergleichen. Wiederum ist das untere Ende 162a unterhalb der Unterkante 16b des Ablaufstutzens 116 angeordnet ist. Gehalten wird das Tauchrohr 162 mittels Stegen 162b an dem Überlaufrohrrohr 158 oder einem in das zentrale Rohr 132 eingesetzten Rohr, welches dem Rohr 72 der Ausführungsform der Figuren 1 bis 6 entspricht. Umfasst das Tauchrohr 162 ferner Austrittsöffnungen 162c, die den Austritt von gereinigter Flüssigkeit ermöglichen, so kann das Tauchrohr auch unmittelbar auf der obersten Baugruppe 120 bzw. 164 aufliegen.

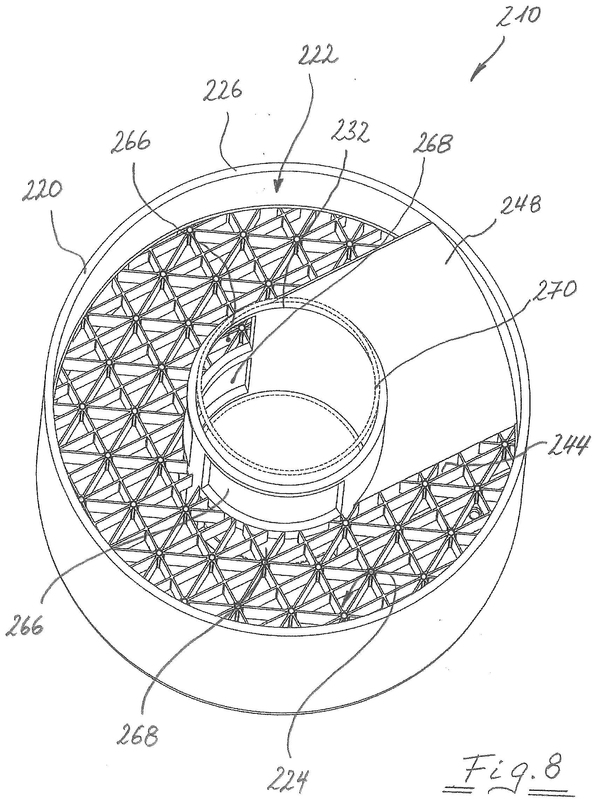

In Figur 8 ist eine dritte Ausführungsform einer erfindungsgemäßen Abwasserbehandlungsanordnung dargestellt. Diese entspricht im Wesentlichen der Ausführungsform gemäß Figur 1. Daher sind analoge Teile mit den gleichen Bezugszeichen versehen wie in den Figuren 1 bis 6, jedoch vermehrt um die Zahl 200. Darüber hinaus wird die Abwasserbehandlungsanordnung 210 im Folgenden nur insoweit beschrieben werden, als sie sich von der Abwasserbehandlungsanordnung 10 der Figuren 1 bis 6 unterscheidet, auf deren Beschreibung hiermit ansonsten ausdrücklich verwiesen sei.

Die Abwasserbehandlungsanordnung 210 gemäß Figur 8 unterscheidet sich von der Abwasserbehandlungsanordnung 10 der Figuren 1 bis 6 im Wesentlichen dadurch, dass die im oberen Ringraum 222 angeordnete, schräg verlaufenden Trennwand 248 und die im unteren Ringraum 224 unterhalb der für Flüssigkeiten und Feststoffe durchlässigen Gitterwandung 234 angeordneten Trennwände, von denen in Figur 8 nur die Trennwand 244 zu sehen ist, mit der Umfangswand 226 und dem den zentralen Durchgang bildenden Rohr 232 fest verbunden sind. Um die Abwasserbehandlungsanordnung 210 dennoch reinigen zu können, verfügt das Rohr 232 über eine Mehrzahl von Öffnungen, und zwar in dem dargestellten Ausführungsbeispiel über zwei Öffnungen 266 auf Höhe des oberen Ringraums 222 und zwei Öffnungen 268 auf Höhe des unteren Ringraums 224.

Wird im Anlagenreinigungsbetrieb ein Spülgerät, beispielsweise eine Spüllanze, von oben in das Rohr 232 der Abwasserbehandlungsanordnung 210 eingeführt, so kann dass von diesem Spülgerät ausgestoßene Wasser durch die Öffnungen 266 und 268 in die Ringräume 222 und 224 eintreten und dort, insbesondere im unteren Ringraum 224, die abgelagerten Fremdstoffe aufwirbeln, so dass sie durch die Öffnungen 266, 268 in den zentralen Durchgang des Rohrs 232 ausgeschwemmt werden.

Um die Öffnungen 266, 268 für den Abwasserbehandlungsbetrieb verschließen zu können, kann ein in Figur 8 lediglich gestrichelt angedeutetes vollwandiges Rohr 270 in das den zentralen Durchgang bildende Rohr 232 eingeführt werden. Zur Vermeidung von Leckageströmen ist es dabei vorteilhaft, wenn sich das Rohr 270 möglichst eng an das Rohr 232 anschmiegt.

Ferner kann das Rohr 270 analog zu dem Rohr 70 der Ausführungsform der Figuren 1 bis 6 dazu ausgebildet sein, die Sedimentationsbaugruppen 220 vor Auftrieb zu sichern.

## Patentansprüche

1. Abwasserbehandlungsanordnung (10) zum zumindest teilweisen Entfernen von Fremdstoffen, die eine gegenüber Wasser abweichende spezifische Dichte aufweisen, aus Abwasser, insbesondere aus Regenwasser, umfassend:
• einen Schacht (12),
• wenigstens ein in dem Schacht (12) angeordnetes Ringraumpaar (20) mit einem in Höhenrichtung (H) des Schachts (12) oberen Ringraum (22) und einem unteren Ringraum (24), zwischen denen eine für Fremdstoffe durchlässige Zwischenwand (34) angeordnet ist,
**dadurch gekennzeichnet, dass**
am oberen Ende des oberen Ringraums (22) eine für Fremdstoffe undurchlässige obere Begrenzungswand (28) und am unteren Ende des unteren Ringraums (24) eine für Feststoffe undurchlässige untere Begrenzungswand (30) vorgesehen ist,
wobei in der unteren Begrenzungswand (30) eine erste Öffnung (36) vorgesehen ist, an welche ein den unteren Ringraum (24) in Höhenrichtung (H) durchsetzender Kanalabschnitt (24b) anschließt, der durch eine in der Zwischenwand (34) vorgesehene zweite Öffnung (38) mit dem oberen Ringraum (22) verbunden ist,
wobei im oberen Ringraum (22) eine Trennwand (48) vorgesehen ist, welche den oberen Ringraum (22) derart unterteilt, dass zwischen der zweiten Öffnung (38) und einer in der oberen Begrenzungswand (28) vorgesehenen dritten Öffnung (40) ein in Umfangsrichtung (U) des Schachts (12) verlaufender Kanalabschnitt (22a) gebildet ist,
wobei der in Umfangsrichtung (U) des Schachts (12) verlaufende Kanalabschnitt (22a) des oberen Ringraums (22) einen Strömungsraum und der untere Ringraum (24) einen Sedimentationsraum der Abwasserbehandlungsanordnung bildet, und wobei ein den unteren Ringraum (24) in Höhenrichtung (H) durchsetzender Kanalabschnitt (24b) dazu ausgebildet ist, sicherzustellen, dass das Abwasser in den oberen Ringraum (22) hinein bzw. aus diesem heraus gelangen kann, ohne die Fremdstoffe, die sich in dem unteren Ringraum (24) abgesetzt haben, wieder aufzuwirbeln.

2. Abwasserbehandlungsanordnung nach Anspruch 1,
**dadurch gekennzeichnet, dass** eine Mehrzahl von Ringraumpaaren (20) in Höhenrichtung (H) des Schachts (12) übereinander angeordnet ist.

3. Abwasserbehandlungsanordnung nach Anspruch 1 oder 2,
**dadurch gekennzeichnet, dass** die erste Öffnung (36) den Zulauf zu dem wenigstens einen Ringraumpaar (20) und die dritte Öffnung (40) den Ablauf aus dem Ringraumpaar (20) bildet.

4. Abwasserbehandlungsanordnung nach einem der Ansprüche 1 bis 3
**dadurch gekennzeichnet, dass** an der Oberseite und der Unterseite des wenigstens einen Ringraumpaars (20) Ausrichtungsvorrichtungen vorgesehen sind, welche zum Zusammenwirken mit zugehörigen Ausrichtungsvorrichtungen eines benachbarten Ringraumpaars (20) ausgebildet und bestimmt sind.

5. Abwasserbehandlungsanordnung nach einem der Ansprüche 2 bis 4,
**dadurch gekennzeichnet, dass** die dritte Öffnung (40) des jeweils unteren Ringraumpaars (20) und die erste Öffnung (36) des jeweils oberen Ringraumpaars (20) einander in Höhenrichtung (H) des Schachts (12) miteinander in Strömungsverbindung stehen, beispielsweise einander zumindest teilweise überlappend angeordnet sind.

6. Abwasserbehandlungsanordnung nach einem der Ansprüche 1 bis 5,
**dadurch gekennzeichnet, dass** die erste Öffnung (36), die zweite Öffnung (38) und die dritte Öffnung (40) in Höhenrichtung (H) des Schachts (12) einander überlappend angeordnet sind.

7. Abwasserbehandlungsanordnung nach einem der Ansprüche 1 bis 6,
**dadurch gekennzeichnet, dass** das wenigstens eine Ringraumpaar (20) einen von den Kanalabschnitten (24b, 22a) strömungsmäßig getrennten, in Höhenrichtung (H) des Schachts (12) verlaufenden, vorzugsweise zentralen, Durchgang (32) aufweist.

8. Abwasserbehandlungsanordnung nach einem der Ansprüche 1 bis 7,
**dadurch gekennzeichnet, dass** die Wandungen (44, 46), welche den unteren Ringraum (24) in Höhenrichtung (H) durchsetzenden Kanalabschnitt (24b) bilden, und die Trennwand (48) an einem gesonderten Einsatz (42) ausgebildet sind.

9. Abwasserbehandlungsanordnung nach Anspruch 7, **dadurch gekennzeichnet, dass** der Innenraum des in Höhenrichtung des Schachts verlaufenden Durchgangs (32) mit dem unteren Ringraum und gewünschtenfalls auch dem oberen Ringraum durch wenigstens eine in der Umfangswandung des Durchgangs vorgesehene Öffnung wahlweise in oder außer Fluidverbindung bringbar ist.

10. Abwasserbehandlungsanordnung nach Anspruch 9,
**dadurch gekennzeichnet, dass** in den in Höhenrichtung des Schachts verlaufenden Durchgang (32) ein Rohr einsetzbar sein, welches die wenigstens eine Öffnung im Abwasserbehandlungsbetrieb verschließt.

11. Abwasserbehandlungsanordnung nach einem der Ansprüche 1 bis 10,
**dadurch gekennzeichnet, dass** der Abstand der Zwischenwand (34) von der oberen Begrenzungswand (28) größer als ihr Abstand von der unteren Begrenzungswand (30).

12. Abwasserbehandlungsanordnung nach einem der Ansprüche 1 bis 11,
**dadurch gekennzeichnet, dass** wenigstens ein Ringraumpaar (20) als von dem Schacht (12) und gegebenenfalls von einem benachbarten Ringraumpaar (20) gesonderte Baugruppe (20) ausgebildet ist.

13. Abwasserbehandlungsanordnung nach einem der Ansprüche 1 bis 12,
**dadurch gekennzeichnet, dass** oberhalb des Ringraumpaars (120) bzw. oberhalb des obersten Ringraumpaars (120) ein von dem aus diesem Ringraumpaar (120) austretenden Abwasser durchströmbares Gehäuse (164) angeordnet ist, in dem ein Filtermedium zum Ad- oder/und Absorbieren von Fremdstoffen aus dem Abwasser aufgenommen ist.

14. Abwasserbehandlungsanordnung nach einem der Ansprüche 1 bis 13,
**dadurch gekennzeichnet, dass** dem oberen Ende (12d) des Schachts (12) benachbart eine Auffangvorrichtung (62) für Leichtstoffe vorgesehen ist.

15. Ringraumpaar-Baugruppe für eine Abwasserbehandlungsanordnung nach den Ansprüchen 1 und 12 und gewünschtenfalls einem der Ansprüche 2 bis 11, 13 und 14, umfassend
wenigstens ein Ringraumpaar (20) mit einem in Höhenrichtung (H) oberen Ringraum (22) und einem unteren Ringraum (24), zwischen denen eine für Fremdstoffe durchlässige Zwischenwand (34) angeordnet ist,
**dadurch gekennzeichnet, dass** am oberen Ende des oberen Ringraums (22) eine für Fremdstoffe undurchlässige obere Begrenzungswand (28) und am unteren Ende des unteren Ringraums (24) eine für Feststoffe undurchlässige untere Begrenzungswand (30) vorgesehen ist,
wobei in der unteren Begrenzungswand (30) eine erste Öffnung (36) vorgesehen ist, an welche ein den unteren Ringraum (24) in Höhenrichtung (H) durchsetzender Kanalabschnitt (24b) anschließt, der durch eine in der Zwischenwand (34) vorgesehene zweite Öffnung (38) mit dem oberen Ringraum (22) verbunden ist,
wobei im oberen Ringraum (22) eine Trennwand (48) vorgesehen ist, welche den oberen Ringraum (22) derart unterteilt, dass zwischen der zweiten Öffnung (38) und einer in der oberen Begrenzungswand (28) vorgesehenen dritten Öffnung (40) ein in Umfangsrichtung (U) verlaufender Kanalabschnitt (22a) gebildet ist,
wobei der in Umfangsrichtung (U) verlaufende Kanalabschnitt (22a) des oberen Ringraums (22) einen Strömungsraum und der untere Ringraum (24) einen Sedimentationsraum der Abwasserbehandlungsanordnung bildet, und
wobei der den unteren Ringraum (24) in Höhenrichtung (H) durchsetzende Kanalabschnitt (24b) dazu ausgebildet ist, sicherzustellen, dass das Abwasser in den oberen Ringraum (22) hinein bzw. aus diesem heraus gelangen kann, ohne die Fremdstoffe, die sich in dem unteren Ringraum (24) abgesetzt haben, wieder aufzuwirbeln.

## Claims

1. Waste water treatment assembly (10) for the at least partial removal of foreign substances, which have a specific density differing from water, from waste water, in particular from rainwater, comprising:
- a shaft (12),
- at least one pair of annular chambers (20) positioned within the shaft (12), comprising, in the height direction (H) of shaft (12), an upper annular chamber (22) and a lower annular chamber (24), between which an intermediate wall (34) is positioned which is permeable to foreign substances,
**characterised in that**
at the upper end of the upper annular chamber (22) an upper delimiting wall (28) is provided which is impermeable to foreign substances and at the lower end of the lower annular chamber (24) a lower delimiting wall (30) is provided which is impermeable to solid substances,
a first opening (36) being provided in the lower delimiting wall (30), to which opening a channel portion (24b) is joined, which channel portion passes through the lower annular chamber (24) in the height direction (H) and is connected to the upper annular chamber (22) via a second opening (38) provided in the intermediate wall (34),
a partition (48) being provided in the upper annular chamber (22), which partition divides the upper annular chamber (22) in such a way that a channel portion (22a) is formed between the second opening (38) and a third opening (40) provided in the upper delimiting wall (28), which channel portion extends in the circumferential direction (U) of the shaft (12),
the channel portion (22a) of the upper annular chamber (22) which extends in the circumferential direction (U) of the shaft (12) forming a flow chamber and the lower annular chamber (24) forming a sedimentation chamber of the waste water treatment assembly, and
a channel portion (24b) passing through the lower annular chamber (24) in the height direction (H) being designed to ensure that the waste water is able to flow into and out of the upper annular chamber (22), without stirring up the foreign substances again which have settled in the lower annular chamber (24).

2. Waste water treatment assembly according to claim 1,
**characterised in that** a plurality of pairs of annular chambers (20) are arranged one above the other in the height direction (H) of the shaft (12).

3. Waste water treatment assembly according to either claim 1 or claim 2,
**characterised in that** the first opening (36) forms the inlet to the at least one pair of annular chambers (20) and the third opening (40) forms the outlet from the pair of annular chambers (20).

4. Waste water treatment assembly according to any of claims 1 to 3,
**characterised in that** alignment devices are provided on the upper side and lower side of the at least one pair of annular chambers (20), which alignment devices are designed and configured in order to interact with corresponding alignment devices of a nearby pair of annular chambers (20).

5. Waste water treatment assembly according to any of claims 2 to 4,
**characterised in that** the third opening (40) of the respective lower pair of annular chambers (20) and the first opening (36) of the respective upper pair of annular chambers (20) are fluidically connected to one another in the height direction (H) of the shaft (12), for example by at least partially overlapping one another.

6. Waste water treatment assembly according to any of claims 1 to 5,
**characterised in that** the first opening (36), the second opening (38) and the third opening (40) are positioned so as to overlap one another in the height direction (H) of the shaft (12).

7. Waste water treatment assembly according to any of claims 1 to 6,
**characterised in that** the at least one pair of annular chambers (20) has a preferably central passage (32), which is fluidically separate from the channel portions (24b, 22a) and extends in the height direction (H) of the shaft (12).

8. Waste water treatment assembly according to any of claims 1 to 7,
**characterised in that** the walls (44, 46), which form the channel portion (24b) which passes through the lower annular chamber (24) in the height direction (H), and the partition (48) are formed on a separate insert (42).

9. Waste water treatment assembly according to claim 7,
**characterised in that** the inner chamber of the passage (32) extending in the height direction of the shaft may be selectively fluidically connected to or disconnected from the lower annular chamber and, if required, also to or from the upper annular chamber, via at least one opening, which is provided in the circumferential wall of the passage.

10. Waste water treatment assembly according to claim 9,
**characterised in that** a pipe may be inserted into the passage (32) extending in the height direction of the shaft, said pipe closing the at least one opening during waste water treatment operation.

11. Waste water treatment assembly according to any of claims 1 to 10,
**characterised in that** the distance between the intermediate wall (34) and the upper delimiting wall (28) is larger than its distance from the lower delimiting wall (30).

12. Waste water treatment assembly according to any of claims 1 to 11,
**characterised in that** at least one pair of annular chambers (20) is formed as a module (20), which is separate from the shaft (12) and, if required, from a nearby pair of annular chambers (20).

13. Waste water treatment assembly according to any of claims 1 to 12,
**characterised in that** a housing (164), through which waste water exiting from a pair of annular chambers (120) can flow, is positioned above the pair of annular chambers (120) or above the uppermost pair of annular chambers (120), in which housing a filter medium for adsorbing and/or absorbing foreign substances from the waste water is accommodated.

14. Waste water treatment assembly according to any of claims 1 to 13,
**characterised in that** a collecting device (62) for lightweight materials is provided adjacent to the upper end (12d) of the shaft (12).

15. Module of pairs of annular chambers for a waste water treatment assembly according to claims 1 and 12 and, if desired, any of claims 2 to 11, 13 and 14, comprising
at least one pair of annular chambers (20) having, in the height direction (H), an upper annular chamber (22) and a lower annular chamber (24), between which an intermediate wall (34) is positioned which is permeable to foreign substances, **characterised in that**
at the upper end of the upper annular chamber (22) an upper delimiting wall (28) is provided which is impermeable to foreign substances and at the lower end of the lower annular chamber (24) a lower delimiting wall (30) is provided which is impermeable to solid substances,
a first opening (36) being provided in the lower delimiting wall (30), to which opening a channel portion (24b) is joined, which channel portion passes through the lower annular chamber (24) in the height direction (H) and is connected to the upper annular chamber (22) via a second opening (38) provided in the intermediate wall (34),
a partition (48) being provided in the upper annular chamber (22), which partition divides the upper annular chamber (22) in such a way that a channel portion (22a) is formed between the second opening (38) and a third opening (40) provided in the upper delimiting wall (28), which channel portion extends in the circumferential direction (U) of the shaft (12),
the channel portion (22a) of the upper annular chamber (22) which extends in the circumferential direction (U) of the shaft (12) forming a flow chamber and the lower annular chamber (24) forming a sedimentation chamber of the waste water treatment assembly, and
a channel portion (24b) passing through the lower annular chamber (24) in the height direction (H) being designed to ensure that the waste water is able to flow into and out of the upper annular chamber (22), without stirring up the foreign substances again which have settled in the lower annular chamber (24).

## Revendications

1. Ensemble de traitement des eaux usées (10) servant à éliminer au moins en partie des eaux usées, en particulier des eaux de pluie, des substances étrangères, qui présentent une densité spécifique divergente par rapport à l'eau, comprenant :
- un puits (12),
- au moins une paire d'espaces annulaires (20) disposée dans le puits (12) avec un espace annulaire supérieur (22) dans le sens de la hauteur (H) du puits (12) et un espace annulaire inférieur (24), entre lesquels est disposée une paroi intermédiaire (34) laissant passer des matières étrangères,
**caractérisé en ce que**
une paroi de délimitation supérieure (28) ne laissant pas passer des substances étrangères est prévue à l'extrémité supérieure de l'espace annulaire supérieur (22), et une paroi de délimitation inférieure (30) ne laissant pas passer des substances étrangères est prévue à l'extrémité inférieure de l'espace annulaire inférieur (24),
dans lequel est prévue, dans la paroi de délimitation inférieure (30), une première ouverture (36), à laquelle se raccorde une section de canal (24b) traversant l'espace annulaire inférieur (24) dans le sens de la hauteur (H), laquelle est reliée à l'espace annulaire supérieur (22) par une deuxième ouverture (38) prévue dans la paroi intermédiaire (34),
dans lequel une paroi de séparation (48) est prévue dans l'espace annulaire supérieur (22), laquelle divise l'espace annulaire supérieur (22) de telle manière qu'une section de canal (22a) s'étendant dans la direction tangentielle (U) du puits (12) est formée entre la deuxième ouverture (38) et une troisième ouverture (40) prévue dans la paroi de délimitation supérieure (28),
dans lequel la section de canal (22a), s'étendant dans la direction tangentielle (U) du puits (12), de l'espace annulaire supérieur (22) forme un espace d'écoulement et l'espace annulaire inférieur (24), un espace de sédimentation de l'ensemble de traitement des eaux usées, et
dans lequel une section de canal (24b) traversant l'espace annulaire inférieur (24) dans le sens de la hauteur (H) est réalisée afin de garantir que les eaux usées puissent parvenir à l'intérieur de l'espace annulaire supérieur (22) ou en sortir sans agiter à nouveau les substances étrangères, qui se sont déposées dans l'espace annulaire inférieur (24).

2. Ensemble de traitement des eaux usées selon la revendication 1,
**caractérisé en ce qu'**une multitude de paires d'espaces annulaires (20) sont disposées les unes au-dessus des autres dans le sens de la hauteur (H) du puits (12).

3. Ensemble de traitement des eaux usées selon la revendication 1 ou 2,
**caractérisé en ce que** la première ouverture (36) forme l'arrivée vers l'au moins une paire d'espaces annulaires (20) et la troisième ouverture (40) forme l'évacuation hors de la paire d'espaces annulaires (20).

4. Ensemble de traitement des eaux usées selon l'une quelconque des revendications 1 à 3,
**caractérisé en ce que** sont prévus, au côté supérieur et au côté inférieur de l'au moins une paire d'espaces annulaires (20), des dispositifs d'orientation, qui sont réalisés pour et destinés à coopérer avec des dispositifs d'orientation associés d'une paire d'espaces annulaires (20) adjacente.

5. Ensemble de traitement des eaux usées selon l'une quelconque des revendications 2 à 4,
**caractérisé en ce que** la troisième ouverture (40) de chaque paire d'espaces annulaires (20) inférieure et la première ouverture (36) de chaque paire d'espaces annulaires (20) supérieure sont en communication fluidique l'une avec l'autre dans le sens de la hauteur (H) du puits (12), par exemple sont disposées de manière à se chevaucher l'une l'autre au moins en partie.

6. Ensemble de traitement des eaux usées selon l'une quelconque des revendications 1 à 5,
**caractérisé en ce que** la première ouverture (36), la deuxième ouverture (38) et la troisième ouverture (40) sont disposées de manière à se chevaucher les unes les autres dans le sens de la hauteur (H) du puits (12).

7. Ensemble de traitement des eaux usées selon l'une quelconque des revendications 1 à 6,
**caractérisé en ce que** l'au moins une paire d'espaces annulaires (20) présente un passage (32) séparé des sections de canal (24b, 22a) d'après l'écoulement, s'étendant dans le sens de la hauteur (H) du puits (12), de préférence central.

8. Ensemble de traitement des eaux usées selon l'une quelconque des revendications 1 à 7, **caractérisé en ce que** les parois (44, 46), qui forment la section de canal (24b) traversant l'espace annulaire inférieur (24) dans le sens de la hauteur (H), et la paroi de séparation (48) sont réalisées dans un insert (42) séparé.

9. Ensemble de traitement des eaux usées selon la revendication 7,
**caractérisé en ce que** l'espace intérieur du passage (32) s'étendant dans le sens de la hauteur du puits peut au choix être amené en ou hors communication fluidique avec l'espace annulaire inférieur et éventuellement également avec l'espace annulaire supérieur par au moins une ouverture prévue dans la paroi périphérique du passage.

10. Ensemble de traitement des eaux usées selon la revendication 9,
**caractérisé en ce que** peut être inséré, dans le passage (32) s'étendant dans le sens de la hauteur du puits, un tuyau qui ferme l'au moins une ouverture lors du mode de traitement des eaux usées.

11. Ensemble de traitement des eaux usées selon l'une quelconque des revendications 1 à 10,
**caractérisé en ce que** la distance de la paroi intermédiaire (34) à la paroi de délimitation supérieure (28) est plus grande que sa distance à la paroi de délimitation inférieure (30).

12. Ensemble de traitement des eaux usées selon l'une quelconque des revendications 1 à 11,
**caractérisé en ce qu'**au moins une paire d'espaces annulaires (20) est réalisée sous la forme d'un module (20) séparé du puits (12) et éventuellement d'une paire d'espaces annulaires (20) adjacente.

13. Ensemble de traitement des eaux usées selon l'une quelconque des revendications 1 à 12,
**caractérisé en ce qu'**est disposé, au-dessus de la paire d'espaces annulaires (120) ou au-dessus de la paire d'espaces annulaires la plus haute (120), un boîtier (164) pouvant être parcouru par un flux d'eaux usées sortant de ladite paire d'espaces annulaires (120), dans lequel est logé un milieu filtrant servant à adsorber et/ou à absorber des substances étrangères issues des eaux usées.

14. Ensemble de traitement des eaux usées selon l'une quelconque des revendications 1 à 13,
**caractérisé en ce qu'**un dispositif collecteur (62) pour des substances légères est prévu de manière adjacente à l'extrémité supérieure (12d) du puits (12).

15. Module de paires d'espaces annulaires pour un ensemble de traitement des eaux usées selon les revendications 1 et 12 et de préférence selon l'une quelconque des revendications 2 à 11, 13 et 14, comprenant
au moins une paire d'espaces annulaires (20) avec un espace annulaire supérieur (22) dans le sens de la hauteur (H) et un espace annulaire inférieur (24), entre lesquels est disposée une paroi intermédiaire (34) laissant passer des substances étrangères,
**caractérisé en ce que**
une paroi de délimitation supérieure (28) ne laissant pas passer des substances étrangères est prévue à l'extrémité supérieure de l'espace annulaire supérieur (22) et une paroi de délimitation inférieure (30) ne laissant pas passer des substances étrangères est prévue à l'extrémité inférieure de l'espace annulaire inférieur (24),
dans lequel est prévue, dans la paroi de délimitation inférieure (30), une première ouverture (36), à laquelle se raccorde une section de canal (24b) traversant l'espace annulaire inférieur (24) dans le sens de la hauteur (H), laquelle est reliée, par une deuxième ouverture (38) prévue dans la paroi intermédiaire (34), à l'espace annulaire supérieur (22),
dans lequel est prévue, dans l'espace annulaire supérieur (22), une paroi de séparation (48), qui divise l'espace annulaire supérieur (22) de telle manière qu'une section de canal (22a) s'étendant dans la direction tangentielle (U) est formée entre la deuxième ouverture (38) et une troisième ouverture (40) prévue dans la paroi de délimitation supérieure (28),
dans lequel la section de canal (22a), s'étendant dans la direction tangentielle (U), de l'espace annulaire supérieur (22) forme un espace d'écoulement et l'espace annulaire inférieur (24), un espace de sédimentation de l'ensemble de traitement des eaux usées, et
dans lequel la section de canal (24b) traversant l'espace annulaire inférieur (24) dans le sens de la hauteur (H) est réalisée afin de garantir que les eaux usées puissent parvenir à l'intérieur de l'espace annulaire supérieur (22) ou en sortir sans agiter à nouveau les substances étrangères, qui se sont déposées dans l'espace annulaire inférieur (24).
